Europäisches Patentamt

European Patent Office

Office européen des brevets

(19)

(11) Veröffentlichungsnummer: **0 000 868**
**B1**

(12) EUROPÄISCHE PATENTSCHRIFT

(21) Anmeldenummer: 78100320.7

(22) Anmeldetag: 06.07.78

(51) Int. Cl.³: **G 01 K 11/16, C 09 K 9/02,**
**G 02 F 1/19**

(54) Körper mit reversibel veränderlicher temperaturabhängiger Lichtextinktion und Verfahren zur Herstellung des Körpers

(30) Priorität: 25.08.77 DE 2738253

(43) Veröffentlichungstag der Anmeldung:
07.03.79 Patentblatt 79/05

(45) Bekanntmachung des Hinweises auf die Patenterteilung:
10.12.80 Patentblatt 80/25

(84) Benannte Vertragsstaaten:
BE CH DE FR GB LU NL SE

(56) Entgegenhaltungen:
DE - C - 473 772
FR - A - 2 010 662
FR - A - 2 243 234
FR - A - 2 244 564
US - A - 3 445 291
US - A - 3 591 810

(73) Patentinhaber: TIPP-EX TECHNIK WOLFGANG
DABISCH
Groosstrasse 11
D - 6228 Eltville (DE)

(72) Erfinder: Dabisch, Wolfgang
Groosstrasse 11
D - 6228 Eltville (DE)

(74) Vertreter: Weber, Dieter, Dr., et al
Patentanwälte Dr. D. Weber und Dipl. Phys.
K. Seiffert, Gustav-Freytag-Strasse 25
D - 6200 Wiesbaden 1 (DE)

Courier Press, Leamington Spa, England.

## Körper mit reversibel veränderlicher temperaturabhängiger Lichtextinktion und Verfahren zur Herstellung des Körpers

Die Erfindung betrifft Körper mit reversibel veränderlicher temperaturabhängiger Lichtextinktion. Diese sind geeignet für Temperaturbestimmungen, Temperaturmessungen und Temperaturangaben, wie beispielsweise als Frostwarneinrichtungen, Glatteiswarneinrichtungen, Einrichtungen zur Dämpfung der Sonneneinstrahlung, etwa für Gewächshäuser, Industriebauten, Büro- und Wohnräume, Fahrzeuge usw. sowie zur Temperaturanzeige in technischen Einrichtungen und Apparaturen.

Aus der DT—PS 1 244 391 und der DT—OS 2 154 042 sind Körper mit reversibel veränderlicher temperaturabhängiger Lichtdurchlässigkeit bekannt, die aus reversibel thermokoagulierbarem Kunststoff, Hydratsalzen und gegebenenfalls Wasser bzw. aus hydratisierten Polymeren und/oder Copolymeren von N-Vinyllactamen bestehen und bei denen die temperaturabhängige Lichtdurchlässigkeit auf einer durch Änderung der Temperatur bewirkbaren Divergenz der Brechungsindices eines Matrixmaterials und einer darin dispergierten organischen Substanz beruht. In derartigen Körpern geben die Hydratsalze bzw. hydratisierten Kunststoffe bei Überschreiten einer bestimmten Temperatur Wasser ab, das in kleinen Tröpfchen in dem Kunststoff dispergiert wird und so eine Trübung des Körpers erzeugt. Der Nachteil solcher Körper mit reversibler Temperaturabhängigkeit besteht darin, daß sie nur beim Erwärmen auf relativ hohe Temperaturen eine Lichtextinktionsveränderung zeigen daß dabei stets nur in einer Richtung ein Übergang von einem transparenten zu einem opaken Zustand möglich ist, daß die Reversibilität der Lichtextinktionsveränderung von der Luftfeuchtigkeit abhängig ist und daß kein scharfer Transparenzumschlag erfolgt.

Wieterhin ist aus der DT—OS 1 812 319 ein Rückstrahler für Glatteiswarnvorrichtungen bekannt, der aus einer Flüssigkeit in einer Kapsel besteht, wobei der Erstarrungspunkt dieser Flüssigkeit so eingestellt ist, daß sie dicht oberhalb des Gefrierpunktes von Wasser erstarrt und so die Lichtdurchlässigkeit verliert. Derartige Rückstrahler sind relative teuer und eignen sich nicht, in Massen an Straßenleitpfosten angebracht zu werden. Sie sind bruchempfindlich, da die Kapseln beim Anfahren oder bei mutwilliger Behandlung zerbrechen und die Flüssigkeit auslaufen kann, und schließlich haben sie den Nachteil, daß sie aufgrund ihrer Beschaffenheit nicht geeignet sind, Frostwarnschilder im ungefährlichen Temperaturbereich unsichtbar zu halten und erst im Warnbereich sichtbar werden zu lassen.

Aus der FR—A 20 10 662 sind Körper auf der Basis von Flüssigkristallen bekannt, die aus einer festen Lösung von Cholesterinderivaten in einem Polymer- oder Harzmatrix-material bestehen und bei unterschiedlichen Temperaturen reversibel unterschiedliche Farbe annehmen. Einen Übergang von transparent zu opak oder umgekehrt gibt es dabei nicht.

Die der Erfindung zugrundeliegende Aufgabe bestand somit darin, neue Körper mit reversibel veränderlicher temperaturabhängiger Lichtextinktion zu bekommen, bei denen, je nach Bedarf, ein Übergang von transparent nach opak erzielt und die Lichtextinktionsveränderung auf nahezu beliebige Zieltemperaturen eingestellt werden kann. Eine spezielle Aufgabenstellung besteht darin, solche Körper mit reversibel veränderlicher temperaturabhängiger Lichtextinktion zu bekommen, die als Frostanzeigeeinrichtungen bzw. Glatteiswarneinrichtungen verwendet werden können und in der Nähe des Gefrierpunktes von Wasser von opak nach transparent wechseln und so im Falle von Frost oder Glatteis dahinter befindliche Warnschriften oder Warnzeichen sichtbar werden lassen oder, wenn sie selbst als Warnzeichen geformt sind, durch Trübung sichtbar werden. Eine weitere Aufgabenstellung besteht darin, solche Körper zu erhalten, bei denen der Übergang von transpartent zu opakt oder umgekehrt möglichst scharf ist, die weder von den atmosphärischen Bedingungen, wie der Luftfeuchtigkeit, abhängig sind, noch zerstörungsanfällig sind und die möglichst einfach und vielfältig herstellbar und anzubringen sind. Noch eine weitere Aufgabenstellung besteht darin, solchen Körpern beliebige Form, wie die von Folien geben zu können.

Die erfindungsgemäßen Körper mit reversibel veränderlicher temperaturabhängiger Lichtextinktion aus wenistens einem im wesentlichen optisch transparenten Polymer- und/oder Harzmatrixmaterial (A) und wenigstens einer darin dispergierten organischen Substanz (B) sind dadurch gekennzeichnet, daß die organische Substanz (B) beim Überschreiten der Temperatur, bei der die Lichtextinktionsänderung des Körpers auftritt, schmilzt und im Matrixmaterial (A) eine disperse flüssige Phase bildet und beim Unterschreiten dieser Temperatur erstarrt und im Matrixmaterial (A) eine disperse feste Phase bildet und daß der Brechungsindex der organischen Substanz (B) oberhalb oder unterhalb der Temperatur der Lichtextinktionsänderung mit dem Brechungsindex des Matrixmaterials (A) im wesentlichen übereinstimt.

Wenn hier von Extinktion die Rede ist, soll dieser Begriff die Effekte nicht nur von Absorption und Streuung, sondern auch von Brechung und Reflexion einschließen. Der Begriff Licht bedeutet elektromagnetische Wellen nicht nur im sichtbaren, sondern gegebenenfalls auch im UV- oder IR-Bereich.

Diese erfindungsgemaßen Körper zeigen bei Temperaturveränderungen bei einer vorgegebenen Temperatur einen reversiblen Umschlag von transparent zu opak oder von opak zu transparent. Mit anderen Worten, diese Körper besitzen bei einer vorbestimmten Temperatur einen relativ scharfen Umschlag von starker optischer Extinktion zu hoher Licht-transmission oder umgekehrt. Dieser Vorgang ist uneingeschränkt reversibel und unabhängig von irgendwelchen atmosphärischen Bedingungen.

Derartige Körper können beispielsweise für Temperaturmeßeinrichtungen oder Warneinrichtungen verwendet werden. Beispielsweise können sie als Glatteiswarneinrichtungen benutzt werden, wenn die Zieltemperatur wenig oberhalb des Gefrierpunktes von Wasser eingestellt wird. Dabei ist es zweckmäßig, solche Substanzen für das Matrixmaterial wie auch für die eingelagerte organische Substanz su verwenden, daß bei der Lichtextinktionsveränderung beim Unterschreiten der Zieltemperatur ein Übergang von opak zu lichtdurchlässig erfolgt, d.h. die organische Substanz (B) nach der Einlagerung in das Matrixmaterial wenig oberhalb des Gefrierpunktes von Wasser schmilzt und im festen Zustand einen Brechungsindex besitzt, der möglichst gut mit dem des Matrixmaterials übereinstimmt.

Ein anderes Anwendungsgebiet besteht in Temperaturwarnsystemen, etwa zur Kenntlichmachung einer Temperaturüberschreitung in Räumen oder Behältern, die auf einer bestimmten Temperatur gehalten werden müssen, wie in klimatisierten Räumen, Kühlräumen oder Gefrierfächern. In diesem Fall ist es zweckmäßig, wenn die in das Matrixmaterial eingelagerte organische Substanz B, die wiederum bei der jeweiligen Zieltemperatur der Lichtextinktionsveränderung schmelzen muß, in geschmolzenem Zustand einen Brechungsindex besitzt, der mit demjenigen des Matrixmaterials möglichst gut übereinstimmt, da dann beim Überschreiten der Zieltemperatur eine Zustandsänderung von opak nach transparent auftritt und hinter dem Körper liegende Warnschriften, die im Normalzustand nicht lesbar sind, sichtbar werden.

Eine andere Anwendung ist die der Abschirmeinrichtungen für Sonnen- und Wärmeeinstrahlung etwa für Gewächshäuser, Frühbeete, Industriebauten, Bürofenster und Wohnraumfenster, Fahrzeugfenster und dergleichen.

Für diese Verwendung werden die Substanzen so ausgewählt, daß beim Überschreiten einer bestimmten Zieltemperatur die in das Matrixmaterial eingelagerte organische Substanz (B) schmilzt und im geschmolzenen Zustand einen vom Brechungsindex des Matrixmaterials wesentlich verschiedenen Brechungsindex besitzt, im festen Zustand dagegen einen mit dem Brechungsindex des Matrixmaterials möglichst gut übereinstimmenden Brechungsindex hat. In diesem Fall ist der erfindungsgemäße Körper unterhalb der Zieltemperatur transparent, trübt sich aber schlagartig beim Überschreiten der Zieltemperatur und bietet dann einen Schutz gegen weitere Sonnen- oder Wärmeeinstrahlung. Eine empfindlichere Reaktion des thermofunktionellen Körpers auf Sonnenbestrahlung kann beispielsweise erreicht werden, indem dunkle, vorzugsweise schwarze Farbflecken auf diesen Körper aufgebracht werden. Wird der thermofunktionelle Körper im transparenten Zustand Sonnenbestrahlung ausgesetzt, so erwärmen sich die nur einen geringen Flächenanteil des thermofunktionellen Körpers bedeckenden Farbflecke durch Strahlungsabsorption besonders schnell. Diese Wärme wird durch Wärmeleitung des Körpers an die benachbarten Stellen weitergegeben, worauf diese Stellen durch die erhöhte Temperatur in den streuenden, absorbierenden Zustand umschlagen. In diesem Zustand wird nun wiederum mehr Strahlung absorbiert, die entstehende Wärme weitergeleitet und so fort.

Wenn hier von Körpern die Rede ist, so bedeutet dieser Ausdruck beliebige Formlinge, wie Platten, Folien, Laminate, Blöcke oder beliebig geformte Einrichtungen, aber auch Überzüge auf anderen Gegenständen, wie auf Kunststoffolien, Kunststoffplatten oder Glasplatten. Da das Matrixmaterial aus einem Kunststoff oder Kunstharz besteht, kann es beliebig geformt werden. Besonders zweckmäßig ist es aber, wenn die erfindungsgemäßen Körper in der Form von Folien oder Überzügen auf transparenten Gegenständen, wie Glasplatten oder Kunststoffplatten oder Kunststoffolien vorliegen.

Wenn oben gesagt ist, daß die in das Matrixmaterial (A) eingelagerte, in diesem zumindest teilweise nicht gelöste organische Substanz (B) nach der Einlagerung in dieses Matrixmaterial bei der Zieltemperatur der Lichtextinktionsveränderung schmelzen oder erstarren soll, so sei damit zum Ansdruck gebracht, daß dieser Schmelz- oder Erstarrungspunkt nicht zwangläufig mit dem Schmelz- oder Erstarrungspunkt der reinen organischen Substanz (B) übereinstimmen muß. Gewöhnlich liegt dieser Schmelzpunkt oder Erstarrungspunkt der organischen Substanz (B) nach Einarbeitung in das Matrixmateriel (A) um einige Celsiusgrade unterhalb desjenigen der reinen organischen Substanz (B), wobei die Abweichung von dem Verfahren abhängen kann, nach dem die organische Substanz (B) mit dem Matrixmaterial (A) vereinigt wird. Wenn die organische Substanz (B) mit dem gelösten oder geschmolzenen Matrixmaterial (A) vereinigt wird, liegt die Schmelzpunktabweichung gewöhnlich innerhalb eines Bereiches von 5 Celsiusgraden, während im Falle, daß das Matrixmaterial aus seinen Monomeren und einem Gemisch derselben mit organischer Substanz (B) polymerisiert wird, die Abweichung bis zu 20 Celsiusgrade betragen kann. Es ist aber für den Fachmann einfach, mit Hilfe weniger Versuche festzustellen, wie sich bei einer betreffenden Methode der Einarbeitung der organischen Substanz in das Matrixmaterial und bei Auswahl eines bestimmten Matrixmaterials und einer bestimmten organischen Substanz deren Schmelzpunkt durch die Einarbeitung in das Matrixmaterial erniedrigt. Bei der Auswahl der organischen Substanzen (B) wird man daher gewöhnlich eine Verbindung oder ein Verbindungsgemisch verwenden, die oder das als solche oder solches wenige Celsiusgrade oberhalb der Zieltemperatur schmilzt, so daß durch die Schmelzpunkterniedrigung bei der Einarbeitung in das Matrixmaterial (A) die Zieltemperatur beim Schmelzen möglichst nahekommend erreicht wird.

Es ist auch selbstverständlich, daß das Schmelzen der organischen Substanz (B) über einen begrenzten Temperaturbereich erfolgen kann und darf, doch muß die Zieltemperatur in diesen Schmelzbereich bzw. Erstarrungsbereich fallen.

Der Brechungsindex der eingearbeiteten organischen Substanz (B) soll entweder oberhalb oder unterhalb der Zieltemperatur der Lichtextinktionsveränderung mit dem Brechungsindex des Matrixmaterials im wesentlichen übereinstimmen. Dies bedeutet, daß keine vollständige Identität erforderlich ist. Je besser aber diese Übereinstimmung ist, desto schärfer ist die Lichtextinktionsveränderung und desto transparenter ist der Körper entweder oberhalb oder unterhalb der Zieltemperatur.

Die Schärfe des Effektes, d.h. der Lichtextinktionsveränderung hängt auch davon ab, wie stark sich der Brechungsindex der organischen Substanz bei der Phasenänderung, d.h. beim Übergang von fest nach flüssig oder umgekehrt, ändert. Um einen praktisch verwertbaren Effekt zu bekommen, ist es zweckmäßig, daß diese Veränderung des Brechungsindex der organischen Substanz (B) bei deren Phasenänderung mindestens 2%, vorzugsweise mindestens 5% der Ausgangswertes beträgt.

Die organische substanz (B) ist in dem Matrixmaterial (A) als zweite, d.h. als diskrete Phase eingelagert, und zwar zweckmäßig fein verteilt in der Form kleiner bis kleinster Tröpfchen bzw. Kristallite, vorzugsweise in der Größenordnung der oder kleiner als die Wellenlänge des Lichtes, wo bei der Lichtextinktionsveränderung sich gewöhnlich Tröpfchen in Kristallite oder die Kristallite in Tröpfchen umwandeln. Der Grad der Feinverteilung der organischen Substanz in dem Matrixmaterial kann je nach dem erwünschten Effekt und Verwendungszweck eingestellt werden.

Die organische Substanz (B) kann in das Matrixmaterial in unterschiedlicher Weise eingearbeitet und darin fein verteilt werden. Eine Methode besteht darin, Monomere und/oder Oligomere und/oder Vorpolymere des Matrixmaterials (A) mit der organischen Substanz (B) zu vermischen und gegebenenfalls einen Härter für die Monomeren, Oligomeren oder Vorpolymeren zuzusetzen und dieses Gemisch unter Ausbildung und Formgebung des Matrixmaterials auszupolymerisieren. Dabei kann die organische Substanz (B) in den Monomeren, Oligomeren oder Vorpolymeren des Matrixmaterials durchaus gelöst vorliegen, sofern zu irgendeinem Zeitpunkt während der Polymerisation eine Unverträglichkeit bzw. Schwerlöslichkeit bzw. Phasentrennung auftritt, so daß dann im Endprodukt tatsächlich Matrixmaterial und organische Substanz als zwei getrennte Phasen vorliegen, von denen diejenige organische Substanz (B) die innere oder disperse Phase ist, die in der Matrixphase gewöhnlich mehr oder weniger feinteilig dispergiert ist.

Eine andere Methode besteht darin, die organische Substanz (B) mit einer Lösung des Matrixmaterials in einem organischen Lösungsmittel zu vermischen und anschließend das Lösungsmittel unter Formgebung des Matrixmaterials zu verdampfen. Auch hier kann zunächst beim Auflösen die organische Substanz sich vollständig in der gemeinsamen Lösung auflösen, muß aber beim Verdampfen des Lösungsmittels zu irgendeinem Zeitpunkt in feinteiliger Form als zweite Phase ausfallen. Selbstverständlich ist es auch möglich, die Substanzen so auszuwählen, daß die organische Substanz (B) sich überhaupt nicht vollständig in der Lösung des Matrixmaterials auflöst, sondern stets als zweite Phase darin dispergiert bleibt, wobei dafür Sorge getragen werden muß, daß man eine feinteilige Dispergierung etwa in der Form von kleinen Tröpfchen oder Kristalliten bekommt, etwa durch wirksame Ruhreinrichtungen, Ultraschall oder wirksame Zerkleinerung des Feststoffes.

Eine weitere Methode besteht darin, das Matrixmaterial zu schmelzen, sodann die organische Substanz (B) zuzumischen oder zu dispergieren und abschließend nach gleichmäßigem Durchmischem das Matrixmaterial unter Formgebung abzukühlen.

Die Formgebung kann darin bestehen, daß man das Matrixmaterial mit der darin feinverteilten organischen Substanz (B) in einer Form polymerisieren, aushärten oder erstarren läßt, indem man das Matrixmaterial in üblichen Extrudern mit Mundstucken zu Folien oder Platten oder anderen Formlingen verformt oder andere übliche Formverfahren, wie Folienformverfahren, anwendet oder aber das Matrixmaterial als Beschichtung auf einem anderen transparenten Korper, wie einer Glasplatte, auspolymerisieren oder durch Verdampfen des Lösungsmittels oder durch Erstarren eine Beschichtung dieses transparenten Körpers, wie einer Glasplatte, bilden läßt. Grundsätzlich sind alle bekannten Formverfahren anwendbar, da es sich bei dem Matrixmaterial um Polymer- oder Harzmaterialien handelt, deren Formgebung bekannt ist.

Die Matrixmaterialien können thermoplastische oder duroplastische Kunststoffe, natürliche oder synthetische Harze sein, sie konnen zu Elastomeren oder starren Körpern härten oder auch in gewissem Umfang plastisch sogar klebrig bleiben, wie beispielsweise im Falle bestimmter Harzmatrixmaterialien. In diesem Fall und manchmal auch in anderen Fällen ist es zweckmäßig, das Matrixmaterial sandwichartig zwischen anderen transparenten Körpern, wie Glasplatten oder Kunststoffolien, einzuschließen.

Als Matrixmaterialien können die unterschiedlichsten Stoffklassen verwendet werden, wobei sich die spezielle Auswahl einerseits nach dem Brechungsindex und andererseits nach den für einen speziellen Verwendungszeck benötigten physikalischen Eigenschaften richtet. So kann es erwünscht sein, daß das Matrixmaterial eine starre Folie oder Platte ergibt, etwa zur Befestigung an Straßenleitpfosten als Glatteiswarneinrichtungen. Es kann aber auch erwünscht sein, daß das Matrixmaterial eine biegsame Folie oder einen klebrigen oder plastischen Überzug ergibt. Auf Grund der oben festgelegten Bedingungen an das Matrixmaterial ist es für den Fachmann ein leichtes, aus der Vielzahl bekannter Polymere und Harze ein geeignetes Harzmaterial für eine bestimmte organische Substanz oder umgekehrt auszuwählen. Beispiele geeigneter Matrixmaterialien sind etwa Polyester, Polyamide, Polystyrol, Polyacrylate und Polymethacrylate sowie Silikonharze. Unter den Polyestern sind besonders die hochmolekularen linearen gesättigten Polyester, besonders solche mit Molekulargewichten von 10 000 bis 20 000 geeignet. Ein geeignetes Matrixmaterial ist auch ein Polyvinylidenchlorid-Acrylnitril-Copolymer, das im wesentlichen keine Verzweigungen und Ungesättigtheiten enthält.

Es ist günstig, das Gewichtsbehältnis von organischer Substanz (B) zu Matrixmaterial (A) im Bereich von 1:3 bis 1:16, vorzugsweise von 1:6 bis 1:12 zu halten, so daß 3 bis 16, vorzugsweise 6 bis 12 Gewichtsteile Matrixmaterial auf 1 Gewichtsteil der organischen Substanz (B) kommen.

Beispiele geeigneter organischer Substanzen (B) sind Alkanole, Alkandiole, Halogenalkanole oder -alkandiole, Alkylamine, Alkane, Alkine, Halogenalkane, -alkene oder -alkine, gesättigte oder ungesättigte Mono- oder Dicarbonsäuren oder Ester oder Amide derselben, gesättigte oder ungesättigte Halogenfettsäuren oder Ester oder amide derselben, Arylcarbonsäuren, oder deren Ester oder Amide, Thioalkohole, Thiocarbonsäuren oder deren Ester oder Amide oder Carbonsäureester von Thioalkoholen sowie Gemische derselben, wobei alle diese Verbindungen zweckmäßig 10 bis 40, vorzugsweise 10 bis 30 Kohlenstoffatome enthalten. In den Estern können die Alkoholgruppen ihrerseits gesättigt oder ungesättigt und/oder halogensubstituiert sein. Die Halogenatome sind in diesen Verbindungen zweckmäßig Chlor oder Brom, besonders Chlor. Als besonders günstig erwiesen sich solche Verbindungen als organische Substanz (B), die wenigstens eine geradkettige aliphatische Gruppe, zweckmäßig mit 10 bis 30 Kohlenstoffatomen, enthalten. In den Arylverbindungen ist die Arylgruppe vorzugsweise Phenyl oder substituiertes Phenyl. Durch geeignete Auswahl der organischen Substanz (B) kann man die Hysterese des erfindungsgemäßen Körpers mit reversibel temperaturabhängiger Transparenz gezielt einstellen, d.h. man kann bei dem reversiblen Wechsel zwischen festem und flüssigem Zustand der eingelagerten organischen Substanz (B) gezielt einen Temperaturunterschied zwischen Schmelzen und Erstarren bzw. einen Temperaturunterschied der Lichtextinktionsveränderung beim Erwärmen bzw. Abkühlen bekommen. Eine relativ große Hysterese, d.h. ein solcher Temperaturunterschied von einigen Celsiusgraden, ist beispielsweise bei der Anwendung der Erfindung auf Glatteiswarneinrichtungen erwünscht. Dadurch erreicht man, daß die eingelagerte organische Substanz (B) etwas oberhalb ihres Erstarrungspunktes schmilzt, so daß die Glatteiswarnung noch bei Temperaturen sichtbar bleibt, bei denen zwar normalerweise kein Glatteis mehr auftreten wird, in bestimmten ungünstigen Lagen aber noch lokal auftreten kann.

Um eine möglichst kleine Hysterese zu bekommen, verwendet man zweckmäßig als organische Substanz (B) Verbindungen mit Heteroatomen, wie Halogen, Stickstoff, Sauerstoff und Schwefel.

Einige organische Substanzen neigen zur Ausbildung unterkühlter Schmelzen. Wenn dies verhindert werden soll, kann es zweckmäßig sein, der organischen Substanz (B) Kristallisationskeime in der Form organischer oder anorganischer Kristallite zuzusetzen, wie gemahlenen Quarz, Basalt, glimmer oder Benzamidkristalle. Solche Kristallisationskeime bewirken eine spontane Kristallisation bei der Zieltemperatur der Lichtextinktionsveränderung.

Bei der Anwendung als Temperaturmeß- oder Temperaturwarnsysteme konnen die erfindungsgemäßen Körper als Uberzug, Folie, Platte oder anderer Formling vor einer Tafel mit einem Schriftaufdruck, einer bestimmten Farbtafel, eimen Symbol oder einem Reflektor angebracht werden, so daß oberhalb oder unterhalb des Punktes der Lichtextinktionsveränderung ein Schriftbild, eine bestimmte Farbe, ein Symbol oder eine Rückstrahlung beim Anstrahlen mit Fahrzeugscheinwerfern sichtbar wird. Der Aufdruck kann beispielsweise eine bestimmte Temperaturangabe oder etwa das Wort "Glatteis" oder dergleichen sein.

Selbstverständlich ist es auch möglich, eine Stoffkombination zu verwenden, bei der die dispergierte Substanz (B) oberhalb ihres Phasenumschlagpunktes den gleichen und unterhalb dieses Punktes aber einen zum Harzmatrixmaterial (A) verschiedenen Brechungsindex hat. Der so erhaltene thermofunktionelle Körper wird im Warnbereich opak-weiß und bildet eine sehr deutlichen Kontrast zu einem dunklen oder reflektierenden Hintergrund. Dabei reicht zur Erzielung eines wirksamen Kontrastes eine Dicke der thermofunktionellen Schicht von nur 0,005 bis 0,050 mm. Wenn diese auf einem dünnen, eventuell selbstklebenden Filmträger aufgebracht wird, lassen sich daraus unschwer beliebige Buchstaben oder Zeichen ausstanzen, die sehr unempfindlich und preiswert sind und wegen ihres geringen Volumens eine geringe Wärmekapazität haben und deshalb eine fast trägheitslose Anpassung an wechselnde Temperaturen erlauben.

Im Falle der Verwendung als Sonnenstrahlungs- oder Wärmestrahlungsschutz besteht der erfindungsgemäße Körper zweckmäßig aus einer Beschichtung auf oder zwischen Fensterglasscheiben.

Die folgenden Beispiele dienen der weiteren Erläuterung der Erfindung.

### Beispiel 1

10 Gewichsteile eines lösungsmittelfreien Silikonharzes mit einem Brechungsindex $n_{10}^D = 1,43$ ("Sylgard 184 encapsultating agent" der Firma Dow Chemical) werden mit 1 Gewichtsteil Härter ("Sylgard 184 curing agent" der Firma Dow Chemical) bis zur Homogenität, verrührt. 5 Gewichtsteile dieser Mischung werden mit 1 Gewichtsteil Octadecansäurepentylester mit einem Brechungsindex $n_{10}^D = 1,45$ und $n_0^D = 1,55$ versetzt, wiederum bis zur Homogenität verrührt und in einer 0,5 mm dicken Schicht auf eine Glasplatte aufgebracht. Nach einer 4-stündigen Aushärtung des Silikonharzes bei 65°C entsteht eine reversibel thermofungtionelle Schicht, welche oberhalb 5°C eine gute Transparenz und unterhalb 5°C eine starke Opazität (Lichtextinktion) zeigt.

### Beispiel 2

3 Gewichtsteile thermoplastischen Polyamidharzes, nämlich eines Kondensationsproduktes von polymeren Fettsäuren mit aliphatischen Diaminen (Versalon 1175 der Firma Schering AG) werden bei 150°C aufgeschmolzen. Zu dieser Schmelze wird 1 Gewichtsteil Heptansäuretetradecylester zugeführt und die Schmelze in einer 0,1 mm dicken Schicht auf eine Glasplatte aufgebracht. Nach Abkühlung auf Raumtemperatur entsteht eine reversible thermofunktionelle Schicht, welche oberhalb 7°C Opazität und unterhalb 7°C Transparenz zeigt.

### Beispiel 3

In 20 Gewichtsteilen einer 15%-igen Lösung eines hochmolekularen, linearen Copolyesters auf der Basis aromatischer Dicarbonsäuren und aliphatischer Diole ("Polyester Dynapol L 206" der Firma Dynamit Nobel) in Trichloräthylen wird ein Teil Phenylessigsäurestearylester gelöst. Diese Lösung wird mit Hilfe eines Drahtrakels derart auf eine 0,05 mm dicke Folie aus Polyterephthalsäureglykolester aufgebracht, daß nach dem Verdampfen des Lösungsmittels eine Schichtdicke von 0,02 mm resultiert. Die so erzeugte Schicht thermofunctioneller Transparenz zeigt oberhalb 40°C Opazität und unterhalb 40°C Transparenz.

### Beispiel 4

In 10 Gewichsteilen einer 20%-igen Lösung eines Polyestes auf der Basis eines Gemisches aromatischer sowie nichtaromatischer Dicarbonsäuren und aliphatischer Diole ("Polyester CR 04—178" der Firma Bostik, Oberursel) in Trichloräthylen wird ein Teil eines innigen Gemisches von 10 Teilen Essigsäureheptadecylester, 10 Teilen Hexadecansäureheptylester und 1 Teil Octadecansäureoctadecylester (als Kristallisationskeim) gelöst. Diese Lösung wird mit Hilfe eines Drahtrakels derart auf eine 0,075 mm dicke Folie aus Polyterephthalsäureglykolester aufgebracht, daß nach dem Verdampfen des Lösungsmittels eine Schichtdicke von 0,02 mm resultiert. Die so erzeugte Schicht temperaturabhängiger Lichtextinktion zeigt oberhalb von 18,0°C Opazität und unterhalb 17,3°C Transparenz. Dieser enge Bereich zwischen den Umschalgstemperaturen beim Erwärmen bzw. Abkühlen wird hierbei durch die Zugabe des Octadecansäureoctadecylesters als Kristallisationskeim erreicht.

### Beispiel 5

3 Gewichtsteile eines thermoplastischen Polystyrols ("Hostyren N 2000" der Firma Hoechst AB) werden bei ca. 160°C aufgeschmolzen. Zu dieser Schmelze wird ein Teil Heptansäuretetradecyclester zugeführt und die Schmelze in einer 0,1 mm dicken Schicht auf eine Glasplatte aufgebracht. Nach Abkühlung auf Raumtemperatur entsteht eine reversible thermofunktionelle Schicht, welche oberhalb 7°C Opazität und unterhalb 7°C Transparenz zeigt.

### Beispiel 6

4 Gewichtsteile eines schmelzbaren Polymethacrylates ("Plexigum P28" der Firma Röhm GmbH, Darmstadt) werden bei ca. 160°C aufgeschmolzen. Zu dieser Schmelze wird 1 Gewichtsteil Eicosan zugeführt und die Schmelze in einer 0,07 mm dicken Schicht auf eine Glasplatte aufgebracht. Nach Abjühlung auf Raumtemperatur entsteht eine erfindungsgemäße Schicht, welche oberhalb 35°C Transparenz und unterhalb 35°C Opazität zeigt.

### Beispiel 7

9 Gewichtsteile eines linearen gesättigten Copolyesters mit einem Brechnungsindex $n_{25}^D = 1,52$ ("Polyester RFF—221 174" der Firma Bostik, Oberursel) werden bei ca. 160°C aufgeschmolzen. Zu dieser Schmelze wird 1 Gewichtsteil Octadecan mit einem Brechungsindex $n_{25}^D = 1,51$ und $n_{28}^D = 1,43$ zugeführt und

die Schmelze in einer 0,1 mm dicken Schicht auf einer Glasplatte aufgebracht. Nach Abkühlung auf Raumtemperatur resultiert eine reversible thermofunktionelle Schicht, in der das Octadecan bei 25°C schmilzt, so daß die Schicht oberhalb 25°C Opazität und unterhalb 25°C Transparenz zeigt.

**Patentansprüche**

1. Körper mit reversibel veränderlicher temperaturabhängiger Lichtextinktion aus wenigstens einem im wesentlichen optisch transparenten Polymer- und/oder Harzmatrixmaterial (A) udn wenigstens einer darin dispergierten organischen Substanz (B), dadurch gekennzeichnet, daß die organische Substanz (B) beim Überschreiten der Temperatur, bei der die Lichtextinktionsänderung des Körpers auftritt, schmilzt und im Matrixmaterial (A) eine disperse flüssige Phase bildet und beim Unterschreiten dieser Temperatur erstarrt und im Matrixmaterial (A) eine disperse feste Phase bildet und daß der Brechungsindex der organischen Substanz (B) oberhalb oder unterhalb der Temperatur der Lichtextinktionsänderung mit dem Brechungsindex des Matrixmaterials (A) wesentlichen übereinstimmt.

2. Körper nach Anspruch 1, dadurch gekennzeichnet, daß er in dem Matrixmaterial (A) eine solche organische Substanz (B) eingelagert enthält, deren Brechungsindex sich bei der Phasenänderung um mindestens 2%, vorzugsweise mindestens 5% verändert.

3. Körper nach den Ansprüchen 1 und 2, dadurch gekennzeichnet, daß er die organische Substanz (B) in der Form kleiner Tröpfchen oder Kristallite in dem Matrixmaterial (A) fein verteilt enthält.

4. Körper nach den Ansprüchen 1 bis 3, dadurch gekennzeichnet, daß er die organische Substanz (B) in einem Gewichtsverhältnis zu dem Matrixmaterial (A) von 1:3 bis 1:16, vorzugsweise von 1:6 bis 1:12 enthält.

5. Körper nach den Ansprüchen 1 bis 4, dadurch gekennzeichnet, daß er als organische Substanz (B) ein Alkanol, Alkandiol, Halogenalkanol oder -alkandiol, Alkyl-amin, Alkan, Alken, Halogenalkan, -alken oder -alkin, eine gesättigte oder ungesättigte Mono- oder Dicarbonsäure oder einen Ester oder ein Amid derselben, eine gesättigte oder ungesättigte Halogenfettsäure oder einen Ester oder eine Amid derselben, eine Arylcarbonsäure oder deren Ester oder Amid, einen Thioalkohol, eine Thiocarbonsäure oder einen Ester oder ein Amid derselben oder einen Carbonsäureester eines Thioalkohols oder Gemische dieser Verbindungen, deren jede 10 bis 30 Kohlenstoffatome besitzt, wobei in den Estern die Alkoholgruppe ihrerseits gesättigt oder ungesättigt und/oder halogensubstituiert sein kann, enthält.

6. Körper nach den Ansprüchen 1 bis 5, dadurch gekennzeichnet, daß er als organische Substanz (B) eine Verbindung mit wenigstens einer gradkettigen aliphatischen Gruppe vorzugsweise mit 10 bis 30 Kohlenstoffatomen, enthält.

7. Körper nach den Ansprüchen 1 bis 6, dadurch gekennzeichnet, daß er als Matrixmaterial (A) einen Polyester, ein Polyamid, ein Polyacrylat oder -methacrylat, Polystyrol, ein Silikonharz, Polyvinylchlorid, Polyvinylidenchlorid oder eine Polyvinylidenchlorid-Acrylnitril-Copolymer enthält.

8. Körper nach den Ansprüchen 1 bis 7, dadurch gekennzeichnet, daß die organische Substanz (B) Kristallisationskeime in der Form organischer oder anorganischer Kristallite enthält, die oberhalb der Zieltemperatur der Lichtextinktionsveränderung schmelzen und mit der organischen Substanz (B) keine Mischkristallite bilden.

9. Verfahren zur Herstellung des Körpers nach Anspruch 1, dadurch gekennzeichnet, daß man

a) die organische Substanz (B) mit Monomeren und/oder Oligomeren und/oder Vorpolymeren des Matrixmaterials (A) und gegebenenfalls einem Härter oder Polymerisationskatalysator für diese das Matrixmaterial bildenden Verbindungen vermischt und anschliessend dieselben zu dem Matrixmaterial unter Formgebung polymerisiert oder

b) die organische Substanz (B) mit einer Lösung des Matrixmaterials (A) in einem organischen Lösungsmittel vermischt und anschließend Lösungsmittel unter Formgebung des Matrixmaterials verdampft oder

c) die organische Substanz (B) mit einer Schmelze des Matrixmaterials (A) vermischt und anschließend die Schmelze unter Formgebung abkühlt.

**Claims**

1. A body with reversibly temperature dependent light extinction comprising at least a substantially transparent polymer or resin matrix material (A) and at least one organic substance (B) dispersed in said matrix material, characterized in that the organic substance (B) melts and forms a dispersed liquid phase in said matrix material (A), when the temperature exceeds that one at which the variation of light extinction occurs, and congeals and forms a dispersed solid phase in said matrix material (A), when the temperature falls below the said temperature, and that the refractive index of the organic substance (B) coincides substantially with the refractive index of the matrix material (A) either above or below the temperature of the variation of light extinction.

2. A body according to claim 1, characterized in said matrix material (A) contains embedded therein only an organic substance (B) whose refractive index varies, upon phase alteration, by at least 2%, preferably by at least 5%.

3. A body according to claim 1 and 2, characterized in that it contains said organic substance (B) is in the form of small droplets or crystallites finely distributed in the matrix material.

4. A body according to claim 1 to 3, characterized in that it contains said organic substance (B) in a weight ratio of said matrix material (A) of 1:3 to 1:16, preferably of 1 ;6 to 1:12.

5. A body according to claim 1 to 4, characterized in that it contains as said organic substance (B) an alkanol, alkandiole, halo-alkanol, haloalkandiole, alkylamine, alkane, alkene, haloalkane, haloalkene, haloalkine, a saturated or unsaturated mono or dicarboxylic acid or esters or amides thereof, a saturated or unsaturated halofatty acid, esters or amides thereof, an arylcarboxylic acid or esters or amides thereof, a thioalcohol, a thiocarboxylic acid, esters or amides thereof, a carboxylic acid ester of a thioalcohol and mixtures of said components each of which possesses 10 to 30 carbon atoms, the alcohol group in the esters being optionally saturated or unsaturated and/or halo substituted.

6. A body according to claim 1 to 5, characterized in that it contains as said organic substances (B) a compound having at least one straight-chain aliphatic group, preferably possessing 10 to 30 carbon atoms.

7. A body according to claim 1 to 6, characterized in that it contains as said matrix material (A) a polyester, polyamide, polyacrylate, polymethacrylate, polystyrene, silicon resin, polyvinyl chloride, polyvinylidene chloride or polyvinylidene chloride-acrylonitrile copolymer.

8. A body according to claim 1 to 7, characterized in that said organic substance (B) contains crystallization nuclei in the form of organic or inorganic crystallites which melt above the goal temperature of the light extinction variation and, with the organic substances (B), forms no mixed crystallites.

9. The method of producing the body according to claim 1, characterized in that

a) the organic substance (B) is mixed with monomers and/or oligomers and/or prepolymers of the matrix material (A) and optinally with a curing agent or polymerization catalyst for said compounds forming the matrix material, and subsequently said compounds are polymerized to the matrix material and shaped, or

b) the organic substance (B) is mixed with a solution of the matrix material (A) in an organic solvent and subsequently solvent is evaporated with shaping the matrix material, or

c) the organic substance (B) is mixed with a melt of the matrix material (A) and subsequently the melt is cooled with shaping the matrix material.

## Revendications

1. Corps avec extinction de lumière variable, réversible, dépendant de la température, consistant en au moins une matrice polymère et/ou résineuse (A) essentiellement optique-ment transparente et en au moins une substance organique (B) dispersée dans celle-ci, caractérisé en ce que la substance organique (B) fond lors du dépassement de la température à laquelle se produit un changement d'extinction de lumière du corps, forme dans la matrice (A) une phase liquide dispersée, se solidifie au-dessous de cette température et forme dans la matrice (A) une phase solide dispersée et en ce que l'indice de réfraction de la substance organique (B) correspond essentiellement, au-dessus ou au-dessous de la température de changement de l'extinction de lumière, à l'indice de réfraction de la matrice (A).

2. Corps selon la revendication 1, caractérisé en ce qu'il contient dans la matrice (A), à l'état incorporé, une substance organique (B) dont l'indice de réfraction se modifie, lors du changement de phase, d'au moins 2%, de préférence d'au moins 5%.

3. Corps selon l'une des revendications 1 ou 2, caractérisé en ce qu'il contient la substance organique (B) sous forme de fines gouttelettes ou cristallites finement dispersés dans la matrice (A).

4. Corps selon l'une quelconque des revendications 1 à 3, caractérisé en ce qu'il contient la substance organique (B) dans le rapport pondéral avec la matrice (A) de 1:3 à 1:16 de préférence de 1:6 à 1:12.

5. Corps selon l'une quelconque des revendications 1 à 4, caractérisé en ce qu'il contient, comme substance organique (B), un alcanol, un alcanediol, un halogéno-alcanol ou alcanediol, une alkylamine, un alcane, un alcène, un halogéno-alcane, -alcène ou -alcyne, un acide mono- ou dicarboxylique saturé ou insaturé ou un ester ou un amide de ce type d'acide, un acide gras halogéné saturé ou insaturé ou un ester ou un amide de ce type d'acide, un acide arylcarboxylique ou un ester ou un amide de ce type d'acide, un thioalcool, un acide thio-carboxylique ou un ester ou un amide de ce type d'acide, ou un ester d'acide carboxylique d'un thioalcool, ou des mélanges de ces composés, dont chacun renferme de 10 à 30 atomes de carbone, auquel cas, dans les esters, le groupe alcool peut être de son côté saturé ou insaturé ou substitué par un halogène.

6. Corps selon l'une quelconque des revendications 1 à 5, caractérisé en ce qu'il contient, comme substance organique (B), un composé avec au moins un groupe aliphatique à chaine droite, ayant, de préférence, de 10 à 30 atomes de carbone.

7. Corps selon l'une quelconque des revendications 1 à 6, caractérisé en ce qu'il contient, comme matrice (A), un polyester, un polyamide, une polyacrylate ou -methacrylate, un polystyrène, une résine siliconée, un chlorure de polyvinyle, un chlorure de polyvinylidène ou un copolymère de chlorure de polyvinylidène/arylonitrile.

8. Corps selon l'une quelconque des revendications 1 à 7, caractérisé en ce que la substance organique (B) contient des germes de cristallisation sous la forme de cristallites organiques ou minéraux, qui fondent au-delà de la température recherchée du changement d'extinction de la lumière, et, avec la substance organique (B), il ne se forme pas de cristallites mixtes.

9. Procédé d'obtention du corps selon la revendication 1 caractérisé en ce qu'il consiste:

a) à mélanger la substance organique (B) avec des monomères et/ou des oligomères et/ou des prépolymères de la matrice (A) et éventuellement avec un durcisseur ou un catalyseur de polymérization pour ces composés format la matrice et à polymériser ensuite ceux-ci en façonnant la matrice ou

b) à mélanger la substance organique (B) avec une solution de la matrice (A) dans un solvant organique et à évaporer ensuite le solvant tout en façonnant la matrice ou

c) à mélanger la substance organique (B) avec une masse fondue de la matrice (A) et à refroidir ensuite la masse fondue toute en la façonnant.